# EUROPEAN PATENT APPLICATION

(11) **EP 4 593 224 A1**
(43) Date of publication of application: **30.07.2025**
(21) Application number: 24223548.9
(22) Date of filing: 27.12.2024
(51) Int. Cl.: H02H 9/00, B64D 41/00, G05B 9/03, H02J 1/08

(54) **INRUSH PROTECTION CIRCUIT FOR REDUNDANT POWER SUPPLY**

(30) Priority: 19.01.2024 US 202418417030
(71) Applicant: Honeywell International Inc., Charlotte, NC 28202 (US)
(72) Inventor: CHIANG, Chiyuan, Charlotte, 28202 (US); RAHIM, Faranak, Charlotte, 28202 (US); PHAM, Brian, Charlotte, 28202 (US); ROBLES, Daniel R., Charlotte, 28202 (US)
(74) Representative: Haseltine Lake Kempner LLP

(57) **Abstract**

A power control circuit is configured to perform one or both of: receive a first power signal comprising a first voltage and receive a second power signal comprising the first voltage. The power control circuit is also configured to perform one or both of receive a third power signal comprising a second voltage; and generate, using a power converter based on the first power signal, a fourth power signal comprising the second voltage. Additionally, the power control circuit is also configured to charge, using the first power signal, a first capacitor assembly to prevent a magnitude of a first inrush current from exceeding a threshold inrush current magnitude and charge, using one or both of the third power signal and the fourth power signal, a second capacitor assembly to prevent a magnitude of a second inrush current from exceeding the threshold inrush current magnitude.

## Description

### TECHNICAL FIELD

This disclosure relates to electric motors for aircraft.

### BACKGROUND

An aircraft may include one or more electric motors that are powered by an electric power source, such as a battery. When an electric motor is first energized or turned on, there may be a surge in electrical current flowing from the electric power source. This surge in electrical current is sometimes referred to as "inrush current" and can be significantly greater than electrical current flowing from the electric power source to the electric motor during normal operation of the electric motor. An aircraft may include circuitry for limiting a magnitude of inrush current so that inrush current does not damage components of the aircraft.

### SUMMARY

In general, this disclosure is directed to techniques for limiting a magnitude of inrush current in systems that include a redundant power supply for one or more electric motors. For example, an aircraft power system may comprise an electric motor having two power supply inputs. The system may include two high-voltage power supply inputs for redundancy purposes. If one power supply fails at a critical time (e.g., during flight), the other power supply may deliver power to the electric motor ensuring that the electric motor continues to operate. Power supply systems including more than one high-voltage power supply input for an electric motor may include an inverter circuit and a direct current (DC) link capacitor for each high-voltage power supply input. DC link capacitors may be important for smoothing voltage and current variations and limiting inrush current.

An aircraft power system may charge a DC link capacitor corresponding to each high-voltage power supply input so that the DC link capacitor is at a voltage similar to the corresponding high-voltage power supply input. Charging a DC link capacitor assembly may limit inrush current that would otherwise surge to harmful levels due to voltage imbalance between a high-voltage power supply and the DC link capacitor assembly. The aircraft power system may charge a DC link capacitor assembly by delivering a high-voltage power signal to the DC link capacitor assembly via an inrush resistor that limits inrush current. In some cases, the aircraft power system boosts a low-voltage power signal to a higher voltage and delivers a boosted power signal to charge a DC link capacitor assembly. In response to charging the DC link capacitor assembly using the boosted low-voltage power signal, the aircraft power system may deliver a high-voltage power signal to a power control circuit. Boosting a low-voltage power signal to charge a DC link capacitor assembly may obviate a need to use an inrush resistor to limit inrush current as the DC link capacitor assembly charges.

In response to charging one or more DC link capacitor assemblies being charged to greater than a threshold voltage, the aircraft power system may supply one or more high-voltage power signals to a load. In some examples, the load may include an electric motor comprising one or more windings corresponding to each redundant high-voltage power supply configured to supply high-voltage power to the load. Each of the one or more windings may include a three-phase winding. In some examples, each redundant high-voltage power supply may be configured to supply power to a respective motor of a set of motors. That is, a system may include redundant motors.

The techniques of this disclosure may provide one or more advantages. For example, the aircraft power system may include redundant high-voltage power supply inputs for supplying one or more electric motors with power. This means that when a high-voltage power signal is insufficient, another high-voltage power signal may supply the one or more electric motors. The aircraft power system may perform inrush protection to limit an inrush current associated with each of these redundant high-voltage power supply inputs. For example, first inrush protection may involve charging a first DC link capacitor assembly by delivering a high-voltage power signal via an inrush resistor. The aircraft power system may include redundant low-voltage power supply inputs for charging a DC link capacitor assembly to perform second inrush protection. By charging the DC link capacitor assembly using redundant low-voltage power supply inputs, the aircraft power system may perform the second inrush protection prior to delivering a high-voltage power signal to the power control circuit.

In some examples, a power control circuit includes a power converter. The power control circuit is configured to: perform one or both of: receive, via a first input connection, a first power signal comprising a first voltage; and receive, via a second input connection a second power signal comprising the first voltage. The power control circuit is configured to perform one or both of: receive, via a third input connection, a third power signal comprising a second voltage, wherein the first voltage is greater than the second voltage; and generate, using the power converter based on the first power signal, a fourth power signal comprising the second voltage. The power control circuit is also configured to charge, using the first power signal, a first capacitor assembly to prevent a magnitude of a first inrush current associated with the first power signal from exceeding a threshold inrush current magnitude; and charge, using one or both of the third power signal and the fourth power signal, a second capacitor assembly to prevent a magnitude of a second inrush current associated with the second power signal from exceeding the threshold inrush current magnitude.

In some examples, a method includes performing, by a power control circuit including a power control circuit comprising a power converter, one or both of: receiving, via a first input connection, a first power signal comprising a first voltage; and receiving, via a second input connection a second power signal comprising the first voltage. The method also includes performing, by the power control circuit, one or both of: receiving, via a third input connection, a third power signal comprising a second voltage, wherein the first voltage is greater than the second voltage; and generating, using the power converter based on the first power signal, a fourth power signal comprising the second voltage. Additionally, the method includes charging, by the power control circuit using the first power signal, a first capacitor assembly to prevent a magnitude of a first inrush current associated with the first power signal from exceeding a threshold inrush current magnitude; and charging, by the power control circuit using one or both of the third power signal and the fourth power signal, a second capacitor assembly to prevent a magnitude of a second inrush current associated with the second power signal from exceeding the threshold inrush current magnitude.

In some examples, a system includes a first capacitor assembly; a second capacitor assembly; and a power control circuit comprising a power converter. The power control circuit is configured to: perform one or both of receive, via a first input connection, a first power signal comprising a first voltage; and receive, via a second input connection a second power signal comprising the first voltage. The power control circuit is configured to perform one or both of receive, via a third input connection, a third power signal comprising a second voltage, wherein the first voltage is greater than the second voltage; and generate, using the power converter based on the first power signal, a fourth power signal comprising the second voltage. Additionally, the power control circuit is configured to charge, using the first power signal, the first capacitor assembly to prevent a magnitude of a first inrush current associated with the first power signal from exceeding a threshold inrush current magnitude; and charge, using one or both of the third power signal and the fourth power signal, the second capacitor assembly to prevent a magnitude of a second inrush current associated with the second power signal from exceeding the threshold inrush current magnitude.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating a system for supplying power to an electric motor, in accordance with one or more techniques of this disclosure.
FIG. 2 is a circuit diagram illustrating a system for managing redundant power supply and reducing inrush current using a power control circuit, in accordance with one or more techniques of this disclosure.
FIG. 3 is a circuit diagram illustrating a system including redundant channels for supplying high-voltage power to a load, in accordance with one or more techniques of this disclosure.
FIG. 4 is a flow diagram illustrating an example operation for charging a DC link capacitor and supplying energy to a load, in accordance with one or more techniques of this disclosure.

### DETAILED DESCRIPTION

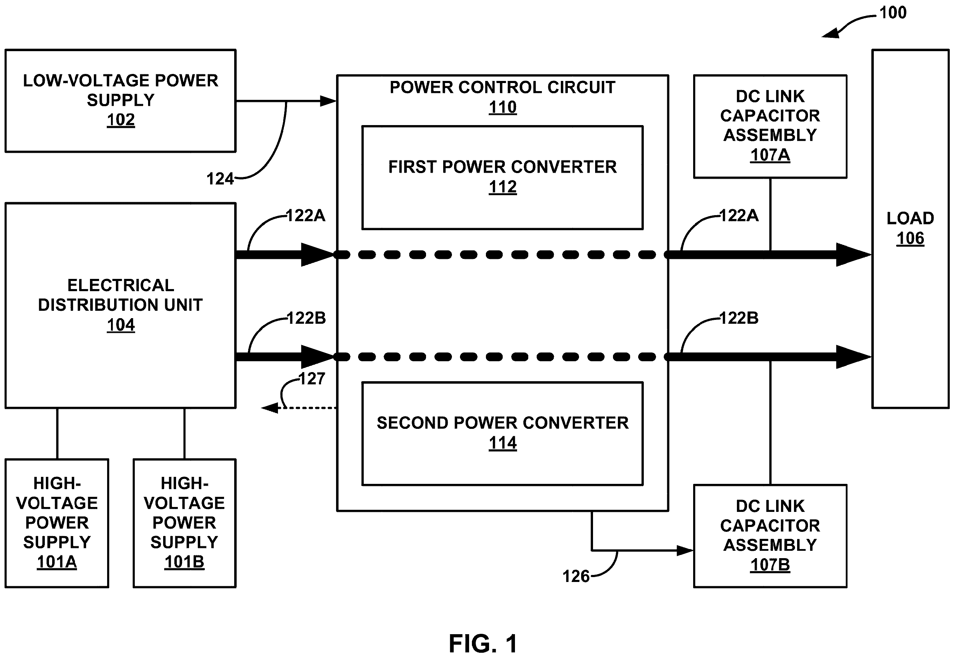

FIG. 1 is a block diagram illustrating a system 100 for supplying power to an electric motor, in accordance with one or more techniques of this disclosure. For example, system 100 includes high-voltage power supply 101A and high-voltage power supply 101B (collectively, "high-voltage power supplies 101"), low-voltage power supply 102, electrical distribution unit 104, load 106, direct current (DC) link capacitor assembly 107A and DC link capacitor assembly 107B (collectively, "DC link capacitor assemblies 107"), and power control circuit 110. Power control circuit 110 may include a first power converter 112 and a second power converter 114. In some examples, system 100 supplies power to an electric motor of an aircraft, but this is not required. Techniques described as being performed by system 100 or components of system 100 may be used to supply power to one or more electrical motors or another kind of load.

System 100 may use high-voltage power supplies 101 and low-voltage power supply 102 to supply power to load 106 and charge DC link capacitor assemblies 107 in a way that limits inrush current. For example, power control circuit 110 may include a first power channel for delivering high-voltage power signal 122A to load 106 from high-voltage power supply 101A and a second power channel for delivering high-voltage power signal 122B to load 106 from high-voltage power supply 101B. The first power channel and the second power channel may support redundant high-voltage power supply to load 106. The first power channel and the second power channel may use different techniques to limit inrush current. For example, the first power channel may include an inrush resistor that limits inrush current associated with high-voltage power signal 122A as high-voltage power signal 122A charges DC link capacitor assembly 107A. When high-voltage power signal 122A is charged, power control circuit 110 may activate a power switch so that high-voltage power signal 122A does not flow across the inrush resistor. This is because when DC link capacitor assembly 107A is charged, there is not enough of a voltage imbalance between DC link capacitor assembly 107A and high-voltage power signal 122A to induce a harmful inrush current.

Power control circuit 110 may charge DC link capacitor assembly 107B prior to receiving high-voltage power signal 122B via the second power channel which does not include an inrush resistor. For example, power control circuit 110 may use redundant low-voltage power signals to charge DC link capacitor assembly 107B. One of these redundant low-voltage power signals is low-voltage power signal 124 received from low-voltage power supply 102. Power control circuit 110 may use first power converter 112 to generate another low-voltage power signal based on high-voltage power signal 122A that flows through the inrush resistor of the first power channel. This means that power control circuit 110 is configured to supply redundant high-voltage power signals via a first power channel including an inrush resistor and a second power channel that does not include an inrush resistor. Since the first power channel includes the inrush resistor, power control circuit 110 may use high-voltage power signal 122A to generate a backup low-voltage power signal for charging DC link capacitor assembly 107B. This allows power control circuit 110 to charge DC link capacitor assembly 107B prior to receiving high-voltage power signal 122B.

High-voltage power supplies 101 are configured to deliver power to load 106 via electrical distribution unit 104 and power control circuit 110. In some examples, high-voltage power supplies 101 includes one or more batteries and one or more power generation circuits to produce operating power. In some examples, high-voltage power supplies 101 are rechargeable to allow extended operation. High-voltage power supplies 101 may include any one or more of a plurality of different battery types, such as nickel cadmium batteries and lithium-ion batteries. In some examples, a maximum voltage output of each of high-voltage power supplies 101 is greater than 100 Volts (V) (e.g., 270V, 540V, or another voltage). High-voltage power supply 101A and high-voltage power supply 101B may represent two independent high-voltage power supplies. For example, high-voltage power supply 101A is separate from high-voltage power supply 101B. For example, high-voltage power supplies 101 may represent redundant high-voltage power supplies each greater than 100V (e.g., two 270V power supplies). High-voltage power supplies 101 are not limited to batteries. In some examples, high-voltage power supplies 101 includes one or more power sources other than batteries, such as an alternator. High-voltage power supplies 101 may, in some examples, include alternating current (AC) generators including rectified DC power outputs. High-voltage power supplies 101 may be configured to supply DC power to power control circuit 110 via electrical distribution unit 104.

Low-voltage power supply 102 is configured to deliver one or more low-voltage power signals. In some examples, low-voltage power supply 102 includes one or more batteries and a power generation circuit to produce operating power. In some examples, low-voltage power supply 102 is rechargeable to allow extended operation. Low-voltage power supply 102 may include any one or more of a plurality of different battery types, such as nickel cadmium batteries and lithium-ion batteries. In some examples, a maximum voltage output of low-voltage power supply 102 is less than 100V (e.g., 28V). Low-voltage power supply 102 is not limited to batteries. In some examples, low-voltage power supply 102 includes one or more power sources other than batteries.

Electrical distribution unit 104 may, in some examples, receive one or more high-voltage power signals from high-voltage power supplies 101. In some examples, electrical distribution unit 104 may receive two or more redundant high-voltage power signals, each high-voltage power signal having the same voltage (e.g., 270V). When one or the redundant high-voltage power signals fails or is insufficient (e.g., more than a threshold amount of voltage lower than 70V), electrical distribution unit 104 may continue to receive one or more other high-voltage power signals from high-voltage power supplies 101. In some examples, electrical distribution unit 104 includes a solid-state power controller (SSPC) or one or more other switching devices for each high-voltage power signal received from high-voltage power supplies 101. This means that electrical distribution unit 104 may be configured to control whether each high-voltage power signal received from high-voltage power supplies 101 is delivered to power control circuit.

A controller of system 100 may, in some examples, include processing circuitry. The processing circuitry, in some examples, may include one or more processors that are configured to implement functionality and/or process instructions for execution within electrical distribution unit. For example, the processing circuitry may be capable of processing instructions stored in a memory. The processing circuitry may include, for example, microprocessors, digital signal processors (DSPs), application specific integrated circuits (ASICs), field-programmable gate arrays (FPGAs), or equivalent discrete or integrated logic circuitry, or a combination of any of the foregoing devices or circuitry. Accordingly, the processing circuitry may include any suitable structure, whether in hardware, software, firmware, or any combination thereof, to perform the functions ascribed herein to the processing circuitry.

System 100 may include a memory. The memory may be configured to store information within electrical distribution unit 104 during operation. The memory may include a computer-readable storage medium or computer-readable storage device. In some examples, the memory includes one or both of a short-term memory or a long-term memory. The memory may include, for example, random access memories (RAM), dynamic random access memories (DRAM), static random access memories (SRAM), magnetic discs, optical discs, flash memories, or forms of electrically programmable memories (EPROM) or electrically erasable and programmable memories (EEPROM). In some examples, the memory is used to store program instructions for execution by the processing circuitry.

Load 106 may define a collection of electrical components that consume power. In some examples, load 106 includes a collection of circuit components such as resistors, inductors, capacitors, diodes, and other semiconductor elements. Load 106 may include one or more post regulator circuits. In some examples, load 106 may include one or more electric motors and other electric components (e.g., dashboard, control panels, heating/cooling systems, and lights) of a vehicle. Example vehicles include aircraft (e.g., electric vertical take-off and landing (eVTOL) aircraft), cars, trucks, buses, motorcycles, golf carts, all-terrain vehicles (ATVs), snowmobiles, and watercraft. In other examples, load 106 includes electric motors and electric components used in applications other than vehicles. In some examples, load 106 may include redundant power supply inputs so that load 106 may receive power even when one of the redundant power supply inputs does not receive sufficient power.

DC link capacitor assemblies 107 may represent electrical circuit components between high-voltage power supplies 101 and load 106. In some examples, each DC link capacitor assembly of DC link capacitor assemblies 107 may include one or more DC link capacitors. For example, DC link capacitor assembly 107A may include a first one or more DC link capacitors and DC link capacitor assembly 107B may include a second one or more DC link capacitors. Each DC link capacitor assembly of DC link capacitor assemblies 107 may be configured to charge to increase voltage and discharge to decrease voltage. DC link capacitor assembly 107A may be connected to a first power channel corresponding to high-voltage power signal 122A, and DC link capacitor assembly 107B may be connected to a second power channel corresponding to high-voltage power signal 122B.

Inrush current associated with high-voltage power supplies 101 may surge in response to there being a large voltage difference between high-voltage power supplies 101 and DC link capacitor assemblies 107. This means that it may be beneficial to charge DC link capacitor assemblies 107 so that a magnitude of inrush current output by high-voltage power supplies 101 does not exceed a threshold inrush current magnitude. For example, when DC link capacitor assembly 107A is charged to a to a voltage of high-voltage power supply 101A, this may prevent to DC link capacitor assembly 107A from causing a large inrush current associated with high-voltage power signal 122A. When DC link capacitor assembly 107B is charged to a voltage that is similar to a voltage of power output by high-voltage power supply 101B, this may prevent a large voltage imbalance between high-voltage power supply 101B and a DC link capacitor assembly corresponding to DC link capacitor assembly 107B from causing a large inrush current associated with high-voltage power signal 122B. This means that it may be beneficial for system 100 to charge DC link capacitor assemblies 107 at least partially prior to supplying load 106 with power from high-voltage power supplies 101.

A DC link capacitor assembly, in the context of an electric motor drive system, may represent a component used in the power electronics section of the electric motor drive system. Electric motors, especially in variable speed applications, may receive one or more control signals to control speed and torque. Systems may achieve control using power electronic converters, such as inverters or variable frequency drives (VFDs). A DC link capacitor may play an important role in one or more systems for controlling an electric motor. For example, when load 106 represents one or more electric motors, DC link capacitor assemblies 107 may play an important role when using inverters to control the electric motor.

In some motor drive systems, a rectifier may convert AC power to DC power. A DC link capacitor may be connected across a DC bus and help to smooth out a rectified voltage. The DC link capacitor may act as a buffer, reducing voltage ripples and ensuring a stable DC voltage. A DC link capacitor may store energy during certain phases of operation. For example, during braking or deceleration, when the motor is acting as a generator, excess energy may be fed into the DC bus. The DC link capacitor may observe this energy, preventing voltage spikes and protecting the drive components. The DC link capacitor may maintain a relatively constant DC voltage level, ensuring a stable power supply for an inverter or other power electronics components. The DC link capacitor may act as a filter for high-frequency components in the power system. DC link capacitor assemblies 107 may smooth out rapid changes in voltage and current, contributing to a more efficient and reliable operation of an electric motor drive as compared with systems that do not use DC link capacitor assemblies 107.

Power control circuit 110 may represent a system controller and/or a motor controller including logic circuitry. The logic circuitry may, in some examples, represent low-voltage logic circuitry configured to receive power from low-voltage power supply 102. In some examples, the logic circuitry of power control circuit 110 may be part of the processing circuitry of the controller of system 100. Power control circuit 110 may be part of the controller of system 100. In some examples, the logic circuitry of power control circuit 110 may be separate from the processing circuitry of the controller of system 100. In some examples, power control circuit 110 is separate from the controller of system 100.

Power control circuit 110 may represent a circuit for controlling a high-voltage power supply to load 106. Power control circuit 110 may support a system for redundant high-voltage supply to load. In some examples, power control circuit 110 may be configured to receive first high-voltage power signal 122A and second high-voltage power signal 122B (collectively, "high-voltage power signals 122"). In some examples, first high-voltage power signal 122A may represent a first high-voltage power supply for load 106 and second high-voltage power signal 122B may represent a second high-voltage power supply for load 106. High-voltage power signals 122 may represent redundant high-voltage power supply for load 106, because when one of first high-voltage power signal 122A and second high-voltage power signal 122B is insufficient or unavailable, the other of first high-voltage power signal 122A and second high-voltage power signal 122B may continue to supply load 106. That is, each of first high-voltage power signal 122A and second high-voltage power signal 122B is sufficient for supplying load 106 without the other of first high-voltage power signal 122A and second high-voltage power signal 122B.

Power control circuit 110 may represent a circuit for receiving high-voltage power signals 122. For example, when load 106 represents one or more electric motors, power control circuit 110 may receive high-voltage power signal 122A and power on. Power control circuit 110 may charge DC link capacitor assembly 107A by delivering high-voltage power signal 122A via an inrush resistor. In response to DC link capacitor assembly 107A being fully charged, power control circuit 110 may close a power switch to deliver high-voltage power signal 122A to load 106 via the power switch without high-voltage power signal 122A flowing across the inrush resistor. Power control circuit 110 may charge DC link capacitor assembly 107B by boosting one or more low-voltage power signals to a higher voltage and delivering the boosted one or more low-voltage power signals to DC link capacitor assembly 107B. In response to DC link capacitor assembly 107B being fully charged, power control circuit 110 may cause electrical distribution unit 104 to output high-voltage power signal 122A to load 106 via power control circuit 110.

Power control circuit 110 may include a first power channel for supplying high-voltage power signal 122A to load 106 and a second power channel for supplying high-voltage power signal 122B to load 106. This means that power control circuit 110 includes a power channel for each of the redundant high-voltage power signals. The first power channel may include an inrush resistor and a power switch connected in parallel. This means that high-voltage power signal 122A may flow across the inrush resistor when the power switch is turned off and high-voltage power signal 122A may flow across the power switch without flowing across the inrush resistor when the power switch is turned on. In some examples, the second power channel may pass directly through power control circuit 110 without passing through an inrush resistor and/or a power switch.

Power control circuit 110 may perform first inrush protection to charge DC link capacitor assembly 107A so that a magnitude of an inrush current associated with first high-voltage power signal 122A does not exceed a threshold inrush current magnitude. For example, power control circuit 110 may include an inrush resistor and a power switch connected along the first power channel through power control circuit 110. To charge DC link capacitor assembly 107A, power control circuit 110 may turn off the power switch so that first high-voltage power signal 122A flows across the inrush resistor. The inrush resistor may limit the inrush current associated with first power signal 122A as first power signal 122A charges DC link capacitor assembly 107A. In response to DC link capacitor assembly 107A being charged, power control circuit 110 may turn on the power switch so that first power signal 122A flows to load 106 without flowing across the inrush resistor. The charged DC link capacitor assembly 107A may limit inrush current associated with first power signal 122A such that the inrush resistor is no longer needed to limit inrush current when power control circuit 110 supplies high-voltage power signal 122A to load 106.

Power control circuit 110 may perform second inrush protection to charge DC link capacitor assembly 107B so that a magnitude of an inrush current associated with second high-voltage power signal 122B does not exceed a threshold inrush current magnitude. For example, power control circuit 110 may receive low-voltage power signal 124 from low-voltage power supply 102. Power control circuit 110 may use low-voltage power signal 124 and/or one or more other low-voltage power signals to charge DC link capacitor assembly 107B by generating power signal 126 and outputting power signal 126 to DC link capacitor assembly 107B. Power control circuit 110 may include redundant low-voltage supplies for charging DC link capacitor assembly 107B to limit an inrush current associated with second high-voltage power signal 122B.

In some examples, low-voltage power signal 124 may represent a first low-voltage power signal. Power control circuit 110 may generate one or more other low-voltage power signals so that it is possible to charge DC link capacitor assembly 107B even when low-voltage power signal 124 is unavailable or insufficient. For example, first power converter 112 may be connected to the first power channel. This means that first power converter 112 may generate a second low-voltage power signal using first high-voltage power signal 122A. The inrush resistor connected to the first power channel may limit an inrush current associated with first high-voltage power signal 122A when first power converter 112 uses first high-voltage power signal 122A to generate the second low-voltage power signal. First power converter 112 may step down a voltage of first high-voltage power signal 122A to create the second low-voltage power signal that is separate from low-voltage power signal 124, which represents the first low-voltage power signal. To perform the second inrush protection to charge DC link capacitor assembly 107B, power control circuit 110 may use one or both of the first low-voltage power signal and the second low-voltage power signal to charge DC link capacitor assembly 107B. When DC link capacitor assembly 107B is charged, power control circuit 110 may output information 127 indicating that DC link capacitor assembly 107B is charged. Electrical distribution unit 104 may output second high-voltage power signal 122B to load 106 via the second power channel in response to DC link capacitor assembly 107B being charged.

In some examples, first high-voltage power signal 122A may be referred to as a "first power signal." In some examples, second high-voltage power signal 122B may be referred to as a "second power signal." In some examples, low-voltage power signal 124 may be referred to as a "third power signal." In some examples, the low-voltage power signal generated by first power converter 112 using first high-voltage power signal 122A may be referred to as a "fourth power signal." In general, a "power signal" refers to electrical power supplied from an electrical power source, the electrical power associated with one or more electrical parameters such as current and voltage.

In some examples, low-voltage power supply 102 may provide power to a logic circuit (not illustrated in FIG. 1) of power control circuit 110. That is, power control circuit 110 may use low-voltage power signal 124 to provide power to the logic circuit. In some examples when low-voltage power signal 124 is insufficient for providing power to the logic circuit of power control circuit 110, the second low-voltage power signal generated by first power converter 112 provides power to the logic circuit of power control circuit 110. Additionally, or alternatively, power control circuit 110 may use low-voltage power signal 124 as one of two redundant low-voltage power sources for charging DC link capacitor assembly 107B. Power control circuit 110 may use low-voltage power supply 102 to supply power to the logic circuit and/or charge DC link capacitor assembly 107B without using low-voltage power supply 102 to supply power to load 106.

In some examples, first power converter 112 represents a buck converter. A buck converter may represent a DC-to-DC power converter that decreases, or "bucks," an input voltage of an input power signal so that an output voltage of an output power signal from the buck converter is lower than the input voltage. In some examples, the buck converter increases an input current of the input power signal so that an output current of the output power signal from the buck converter is greater than the input current. In other words, a buck converter may step down voltage and step up current. When first power converter 112 represents a buck converter, first power converter 112 may generate a second low-voltage power signal using first high-voltage power signal 122A that is separate from the low-voltage power signal 124, which represents a first low-voltage power signal.

Low-voltage power signal 124 and the low-voltage power signal output by first power converter 112 may represent redundant low-voltage power supply for charging DC link capacitor assembly 107B. This is because when one of low-voltage power signal 124 and the low-voltage power signal output by first power converter 112 is insufficient or unavailable, the other of low-voltage power signal 124 and the low-voltage power signal output by first power converter 112 may be available to charge DC link capacitor assembly 107B. That is, each of low-voltage power signal 124 and the low-voltage power signal output by first power converter 112 is sufficient for charging DC link capacitor assembly 107B without the other of low-voltage power signal 124 and the low-voltage power signal output by first power converter 112.

Second power converter 114 may receive one or more low-voltage power signals and use the one or more low-voltage power signals to charge DC link capacitor assembly 107B. In some examples, second power converter 114 represents a boost converter. A boost converter may represent a DC-to-DC power converter that increases, or "boosts," an input voltage of an input power signal so that an output voltage of an output power signal from the boost converter is greater than the input voltage. In some examples, the boost converter decreases an input current of the input power signal so that an output current of the output power signal from the buck converter is lower than the input current. In other words, a boost converter may step up voltage and step down current. When second power converter 114 represents a boost converter, second power converter 114 may generate a power signal using one or more low-voltage power signals for charging DC link capacitor assembly 107B.

In some examples, an input to second power converter 114 represents one or both of low-voltage power signal 124 and the low-voltage power signal output by first power converter 112. This means that second power converter 114 may generate a power signal for charging DC link capacitor assembly 107B when one of the low-voltage power signal 124 and the low-voltage power signal output by first power converter 112 is unavailable or is insufficient. For example, in response to power control circuit 110 not receiving low-voltage power signal 124 or in response to low-voltage power signal 124 being insufficient for charging DC link capacitor assembly 107B, second power converter 114 may generate a power signal for charging DC link capacitor assembly 107B based on the low-voltage power signal output by first power converter 112. In response to power control circuit 110 not receiving first high-voltage power signal 122A or in response to second power converter 114 generating a power signal insufficient for charging DC link capacitor assembly 107B, power control circuit 110 may deliver a power signal for charging DC link capacitor assembly 107B based on low-voltage power signal 124.

Power control circuit 110 may manage high-voltage power supply to load 106 and charge DC link capacitor assemblies 107 in a way that supports redundant high-voltage power supply. For example, when any one of first high-voltage power signal 122A, second high-voltage power signal 122B, and low-voltage power signal 124 is insufficient, power control circuit 110 may support normal operations for charging DC link capacitor assembly 107A and supplying first high-voltage power signal 122A to load 106 or charging DC link capacitor assembly 107B and supplying second high-voltage power second 122B to load 106. This means that power control circuit 110 may ensure that load 106 receives adequate high-voltage power supply from one or both of high-voltage power supply 101A and high-voltage power supply 101B and power control circuit 110 may ensure that DC link capacitor assemblies 107 are sufficiently charged to limit inrush current.

In some examples, there may be an inrush current associated with each of first high-voltage power signal 122A and second high-voltage power signal 122B. Power control circuit 110 may use two separate techniques for limiting inrush current associated with high-voltage power signal 122A and inrush current associated with second high-voltage power signal 122B. By using a power control circuit 110 that integrates two separate techniques for limiting inrush current associated with high-voltage power signal 122A and inrush current associated with second high-voltage power signal 122B, power control circuit 110 may limit inrush current more effectively as compared with systems that use two separate inrush current circuits.

Power control circuit 110 may be configured to perform one or both of receive, from high-voltage power supply 101A via electrical distribution unit 104, a first power signal (e.g., first high-voltage power signal 122A) comprising a first voltage and receive, from high-voltage power supply 101B via a second input connection, a second power signal (e.g., second high-voltage power signal 122B) comprising the first voltage. Power control circuit 110 may be configured to perform one or both of receive, via a third input connection, a third power signal (e.g., low-voltage power signal 124) comprising a second voltage and generate, using first power converter 112 based on the first high-voltage power signal 122A, a fourth power signal comprising the second voltage. The first voltage may be greater than the second voltage. For example, the first voltage may greater than 100 Volts (V) (e.g., 270V or another voltage greater than 100V) and the second voltage may be less than 100V (e.g., 28V or another voltage less than 100V).

Power control circuit 110 may be configured to charge, using the first high-voltage power signal 122A, DC link capacitor assembly 107A to prevent a magnitude of a first inrush current associated with first high-voltage power signal 122A from exceeding a threshold inrush current magnitude. In some examples, power control circuit 110 may perform first inrush current protection to charge DC link capacitor assembly 107A to a voltage that is similar to a voltage of first high-voltage power signal 122A. To perform first inrush current protection, power control circuit 110 may turn off a power switch so that first high-voltage power signal 122A flows through an inrush resistor as first high-voltage power signal 122A charges DC link capacitor assembly 107A. The inrush resistor may prevent the inrush current associated with the first high-voltage power signal 122A from exceeding the threshold inrush current magnitude. In response to DC link capacitor assembly 107A being charged, power control circuit 110 may turn on the power switch so that first high-voltage power signal 122A flows to load 106 across the power switch without flowing across the inrush resistor.

Power control circuit 110 may charge, using one or both of the third power signal (e.g., low-voltage power signal 124) and the fourth power signal (e.g., the low-voltage power signal output by first power converter 112), DC link capacitor assembly 107B to prevent a magnitude of a second inrush current associated with the second power signal from exceeding the threshold inrush current magnitude. In some examples, power control circuit 110 may perform second inrush current protection to charge DC link capacitor assembly 107B to a voltage that is similar to a voltage of second high-voltage power signal 122B. To perform second inrush current protection, power control circuit 110 may charge DC link capacitor assembly 107B by using second power converter 114 to generate a power signal 126 using one or both of low-voltage power signal 124 and the low-voltage power signal generated by first power converter 112. Second power converter 114 outputs power signal 126 to charge DC link capacitor assembly 107B. In response to DC link capacitor assembly 107B being charged, power control circuit 110 may output information 127 indicating that DC link capacitor assembly 107B is charged. In response to receiving information 127 indicating that DC link capacitor assembly 107B is charged, electrical distribution unit 104 may output second high-voltage power signal 122B to load 106 via power control circuit 110.

Power control circuit 110 may be configured to supply, based on the voltage of DC link capacitor assembly 107A being greater than or equal to a threshold DC link capacitor voltage, first high-voltage power signal 122A to load 106 via power control circuit 110. DC link capacitor assembly 107A being charged to greater than or equal to the threshold DC link capacitor assembly voltage may prevent inrush current associated with first high-voltage power signal 122A from exceeding the threshold inrush current magnitude. Power control circuit 110 may be configured to supply, based on the voltage of DC link capacitor assembly 107B being greater than or equal to the threshold DC link capacitor assembly voltage, second high-voltage power signal 122B to load 106 via power control circuit 110. DC link capacitor assembly 107B being charged to greater than or equal to the threshold DC link capacitor assembly voltage may prevent inrush current associated with second high-voltage power signal 122B from exceeding the threshold inrush current magnitude. This means that when one of first high-voltage power signal 122A and second high-voltage power signal 122B is unavailable or insufficient for supplying load 106, the other of first high-voltage power signal 122A and second high-voltage power signal 122B may supply power to load 106. It may be important for load 106 have redundant power supplies for safety reasons, so that load 106 may continue to receive power even when one of the power supplies fails. For example, when load 106 comprises one or more electric motors for an aircraft, it may be important for the one or more electric motors to always have sufficient power supply so that the one or more electric motors do not fail to operate when the aircraft is in flight.

By using second power converter 114 to generate power signal 126 based on one or both of the third power signal (e.g., low-voltage power signal 124) and the fourth power signal (e.g., the low-voltage power signal output by first power converter 112) to charge DC link capacitor assembly 107B, power control circuit 110 is configured to support redundant low-voltage power supplies for performing second inrush protection to limit inrush current associated with second high-voltage power signal 122B. For example, when one of low-voltage power signal 124 and the low-voltage power signal output by first power converter 112 is unavailable or insufficient for generating power signal 126, the other of low-voltage power signal 124 and the low-voltage power signal output by first power converter 112 is available for generating power signal 126 to charge second high-voltage power signal 122B.

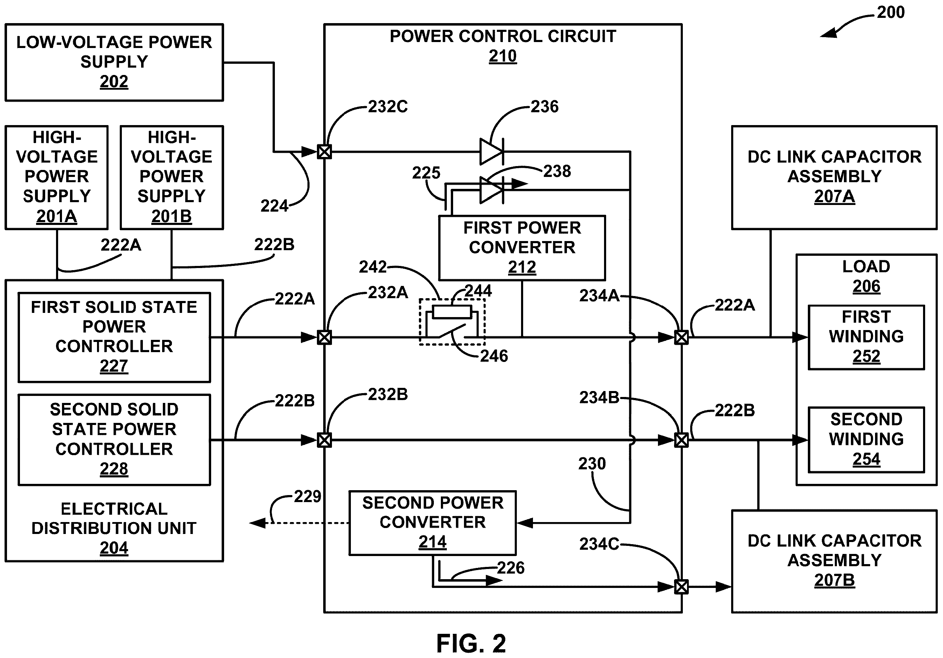

FIG. 2 is a circuit diagram illustrating a system 200 for managing redundant power supply and reducing inrush current using a power control circuit 210, in accordance with one or more techniques of this disclosure. As seen in FIG. 2, system 200 includes high-voltage power supply 201A and high-voltage power supply 201B (collectively, "high-voltage power supplies 201"), low-voltage power supply 202, electrical distribution unit 204, load 206, DC link capacitor assembly 207A and DC link capacitor assembly 207B (collectively, "DC link capacitor assemblies 207"), and power control circuit 210. Electrical distribution unit 204 includes first solid-state power controller 227 and second solid-state power controller 228. Power control circuit 210 includes first power converter 212, second power converter 214, power input connections 232A-232C (collectively, "power input connections 232"), power output connections 234A-234C (collectively, "power output connections 234"), inrush resistor 244, and power switch 246. Load 206 includes first winding 252 and second winding 254.

High-voltage power supplies 201 may be an example of high-voltage power supplies 101 of FIG. 1. Low-voltage power supply 202 may be an example of low-voltage power supply 102 of FIG. 1. Electrical distribution unit 204 may be an example of electrical distribution unit 104 of FIG. 1. Load 206 may be an example of load 106 of FIG. 1. DC link capacitor assemblies 207 may be examples of DC link capacitor assemblies 107 of FIG. 1. Power control circuit 210 may be an example of power control circuit 110 of FIG. 1. First power converter 212 may be an example of first power converter 112 of FIG. 1. Second power converter 214 may be an example of second power converter 114 of FIG. 1.

High-voltage power supplies 201 may be configured to deliver one or more high-voltage power signals to electrical distribution unit 204. For example, high-voltage power supply 201A may be configured to deliver first high-voltage power signal 222A to electrical distribution unit 204 and high-voltage power supply 201B may be configured to deliver second high-voltage power signal 222B to electrical distribution unit 204. This means that high-voltage power supply 201A and high-voltage power supply 201B may represent two separate power supplies, each delivering one of first high-voltage power signal 222A and second high-voltage power signal 222B. In some examples, a maximum voltage output of each of first high-voltage power signal 222A output by high-voltage power supply 201A and second high-voltage power signal 222B output by high-voltage power supply 201B is greater than 100V (e.g., 270V, 540V, or another voltage).

Low-voltage power supply 202 may be configured to deliver one or more low-voltage power signals to power control circuit 210. For example, low-voltage power supply 202 may be configured to deliver low-voltage power signal 224 to power control circuit 210. In some examples, a maximum voltage output of low-voltage power signal 224 output by low-voltage power supply 202 is less than 100V (e.g., 28V, or another voltage). Low-voltage power supply 202 may represent a low-voltage power supply of a vehicle such as an aircraft, but this is not required. Low-voltage power supply 202 may represent any kind of low-voltage power supply.

Electrical distribution unit 204 may include first solid-state power controller 227 and second solid-state power controller 228. Solid-state power controllers may control a flow of electrical power in electrical power distribution systems. Solid-state power controllers may include semiconductor devices such as transistors, thyristors to perform switching and control functions. This may result in faster and more precise control of power distribution as compared with systems that do not control power distribution using solid-state power controllers. In some examples, solid-state power controllers may turn on and turn off rapidly, allowing for precise control of power distribution. In some examples, power control circuit 210 may include electrical distribution unit 204 including first solid-state power controller 227 and second solid-state power controller 228.

In some examples, first solid-state power controller 227 and second solid-state power controller 228 may include built-in protection features, such as overcurrent protection, which helps safeguard electrical systems from damage due to excessive currents. For example, first solid-state power controller 227 and second solid-state power controller 228 may limit inrush current associated with first high-voltage power signal 222A and second high-voltage power signal 222B. Solid-state components may allow for more compact and lightweight designs as compared with traditional electromechanical devices, meaning that solid-state power controllers may be suitable for applications with space constraints.

First solid-state power controller 227 may receive first high-voltage power signal 222A from high-voltage power supply 201A. Second solid-state power controller 228 may receive second high-voltage power signal 222B from high-voltage power supply 201B. In some examples, first solid-state power controller 227 outputs first high-voltage power signal 222A to power control circuit 210. In some examples, second solid-state power controller 228 outputs second high-voltage power signal 222B to power control circuit 210. First solid-state power controller 227 may control whether first high-voltage power signal 222A is output to power control circuit 210. Second solid-state power controller 228 may control whether second high-voltage power signal 222B is output to power control circuit 210.

Power control circuit 210 may be configured to receive first high-voltage power signal 222A via power input connection 232A and/or receive a second high-voltage power signal 222B via power input connection 232B. In some examples, the first high-voltage power signal 222A and the second high-voltage power signal 222B may comprise a first voltage (e.g., 270V). First high-voltage power signal 222A and second high-voltage power signal 222B may represent redundant high-voltage power signals for supplying power to load 206. For example, when one of first high-voltage power signal 222A and second high-voltage power signal 222B offline, unavailable, or otherwise insufficient, power control circuit 210 may supply the other of first high-voltage power signal 222A and second high-voltage power signal 222B to load 206.

In some examples, power control circuit 210 receives low-voltage power signal 224 via power input connection 232C. Low-voltage power signal 224 may comprise a second voltage (e.g., 28V) that is lower than the first voltage of first high-voltage power signal 222A and second high-voltage power signal 222B. The first voltage is not limited to being 270V and the second voltage is not limited to being 28V. The first voltage may comprise any voltage and the second voltage may comprise any voltage that is lower than the first voltage. First power converter 212 may, in some examples, receive at least a portion of first high-voltage power signal 222A. First power converter 212 is configured to generate low-voltage power signal 225 based on first high-voltage power signal 222A. In some examples, low-voltage power signal 225 may comprise the second voltage that is lower than the first voltage of first high-voltage power signal 222A and second high-voltage power signal 222B.

Power control circuit 210 receive low-voltage power signal 224 via power input connection 232C and/or generate low-voltage power signal 225 using first power converter 212. That is, low-voltage power signal 224 and low-voltage power signal 225 represent redundant low-voltage power signals. For example, when one of low-voltage power signal 224 and low-voltage power signal 225 is unavailable, the other one of low-voltage power signal 224 and low-voltage power signal 225 may continue to supply low-voltage power. Low-voltage power signal 224 may travel to second power converter 214 via first diode 236. Low-voltage power signal 225 may travel to second power converter 214 via second diode 238. Second power converter 214 may generate power signal 226 using power signal 230 including one or both of low-voltage power signal 224 and low-voltage power signal 225.

In some examples, power control circuit 210 may perform first inrush protection to limit inrush current associated with first high-voltage power signal 222A. For example, when load 206 calls for power from high-voltage power supply 201A, it may be beneficial for power control circuit 210 may perform first inrush protection by charging DC link capacitor assembly 207A. Power control circuit 210 may perform second inrush protection to limit inrush current associated with second high-voltage power signal 222B. For example, when load 206 calls for power from high-voltage power supply 201B, it may be beneficial for power control circuit 210 may perform second inrush protection by charging DC link capacitor assembly 207B.

Second power converter 214 may generate power signal 226 based on one or both of the low-voltage power signal 224 and low-voltage power signal 225. In some examples, second power converter 214 is a boost converter, and second power converter 214 steps up a voltage of one or both of the low-voltage power signal 224 and low-voltage power signal 225 from the second voltage to a third voltage that is greater than the second voltage. In some examples, a difference between the third voltage and the first voltage of high-voltage power signals 222 is less than a threshold amount of voltage.

Power control circuit 210 is configured to supply, based on the voltage of DC link capacitor assembly 207A being greater than or equal to the threshold DC link capacitor assembly voltage, first high-voltage power signal 222A to first winding 252 of load 206. Power control circuit 210 is configured to supply, based on the voltage of DC link capacitor assembly 207B being greater than or equal to the threshold DC link capacitor assembly voltage, second high-voltage power signal 222B to second winding 254 of load 206. Power control circuit 210 may be configured to supply load 206 with the first high-voltage power signal 222A via power output connection 234A. Power control circuit 210 may be configured to supply load 206 with the second high-voltage power signal 222B via power output connection 234B.

In some examples, by charging DC link capacitor assembly 207A by delivering high-voltage power signal 222A to capacitor assembly 207A via inrush resistor 244, power control circuit 210 is configured to prevent a magnitude of an inrush current associated with high-voltage power signal 222A from exceeding a threshold inrush current magnitude. In some examples, by charging DC link capacitor assembly 207B prior to electrical distribution unit 204 delivering high-voltage power signal 222B to power control circuit 210, power control circuit 210 is configured to prevent a magnitude of an inrush current associated with high-voltage power signal 222B from exceeding the threshold inrush current magnitude. For example, when DC link capacitor assembly 207A is charged by the high-voltage power signal 201A through an inrush resistor 244, this may prevent a harmful inrush current surge in power control circuit 210. When DC link capacitor assembly 207A is fully charged, this may limit the inrush current associated with high-voltage power signal 210A even when high-voltage power signal 210A flows across power switch 246 without flowing across inrush resistor 244. Additionally, or alternatively, when DC link capacitor assembly 207B is charged, this may prevent a voltage difference between DC link capacitor assembly 207B and high-voltage power supply 201B from causing a harmful inrush current surge in power control circuit 210.

In some examples, in response to the first high-voltage power signal 222A received via power input connection 232A being more than a threshold amount of voltage lower than the first voltage, power control circuit 210 is configured to receive second high-voltage power signal 222B via the power input connection 232B. That is, when the first high-voltage power signal 222A is insufficient for supplying power to load 206, power control circuit 210 may continue to receive second high-voltage power signal 222B which is sufficient for supplying power to load 206, and supply the second high-voltage power signal 222B to load 206 via power output connection 234B.

In response to the second high-voltage power signal 222B received via the power input connection 232B being more than a threshold amount of voltage lower than the first voltage, the power control circuit 210 is configured to receive the first high-voltage power signal 222A comprising the first voltage via the power input connection 232A. In other words, when the second high-voltage power signal 222B is not sufficient for supplying power to load 206, power control circuit 210 may continue to receive the first high-voltage power signal 222A that is sufficient for supplying power to load 206, and power control circuit 210 may supply the first high-voltage power signal 222A to load 206 via the power output connection 234B.

Second power converter 214 may generate power signal 226 using one or both of low-voltage power signal 224 and low-voltage power signal 225. In response to the low-voltage power signal 224 received via the power input connection 232C being more than a threshold amount of voltage lower than the second voltage (e.g., insufficient for generating power signal 226), first power converter 212 is configured to generate, based on the first high-voltage power signal 222A, the low-voltage power signal 225 comprising the second voltage. In response to the low-voltage power signal 224 received via the power input connection 232C not being more than a threshold amount of voltage lower than the second voltage (e.g., sufficient for generating power signal 226), second power converter 214 may generate power signal 226 based on low-voltage power signal 224.

In some examples, power control circuit 210 may control inrush protection device 242 to perform first inrush protection to charge DC link capacitor assembly 207A. Inrush protection device 242 including inrush resistor 244 and power switch 246. Power control circuit 210 may control power switch 246 to turn off while power control circuit 210 charges DC link capacitor assembly 207A. In response to power switch 246 being turned off, first high-voltage power signal 222A may flow across inrush resistor 244 to charge DC link capacitor assembly 207A. Inrush resistor 244 may limit the inrush current associated with first high-voltage power signal 222A as DC link capacitor assembly 207A charges. In response to DC link capacitor assembly 207A being charged to a voltage that is greater than the threshold DC link capacitor assembly voltage, power control circuit 210 may control power switch 246 to turn on. In response to power switch 246 being turned on, power control circuit 210 may supply first high-voltage power signal 222A to first winding 252 of load 206, first high-voltage power signal 222A flowing across power switch 246 without flowing across inrush resistor 244. When DC link capacitor assembly 207A is charged, this may limit inrush current associated with first high-voltage power signal 222A such that inrush resistor 244 is not needed to limit inrush current.

Power control circuit 210 may use two different techniques for limiting inrush current associated with first high-voltage power signal 222A and limiting inrush current associated with second high-voltage power signal 222B. Power control circuit 210 may limit inrush current in a "power-up" situation where prior to high-voltage power supply 201A and/or high-voltage power supply 201B supplying power to load 206. That is, first inrush protection may be enabled for a period of time prior to first high-voltage power signal 222A supplying power to load 206. Based on first high-voltage power signal 222A supplying power to load 206, the first inrush protection may be disabled. Second inrush protection may be enabled for a period of time prior to second high-voltage power signal 222B supplying power to load 206. Based on second high-voltage power signal 222B supplying power to load 206, the second inrush protection may be disabled.

The first inrush current protection may involve turning off power switch 246 so that first high-voltage power signal 222A flows through inrush resistor 244. Inrush resistor 244 may limit the inrush current associated with first high-voltage power signal 222A. When the first inrush protection is complete, power switch 246 may turn on so that first high-voltage power signal 222A flows through power switch 246 without flowing across inrush resistor 244. The second inrush current protection involves causing second power converter 214 to charge DC link capacitor assembly 207B to a voltage that is greater than the threshold DC link capacitor assembly voltage. The second inrush current protection also involves notifying electrical distribution unit 204 that the DC link capacitor assembly 207B is charged to greater than the threshold DC link capacitor assembly voltage by outputting information 229 to electrical distribution unit 204. In response to receiving information 229, electrical distribution unit 204 may deliver high-voltage power signal 222B to power control circuit 210. When the second inrush current protection is complete and power control circuit 210 supplies power to load 206, power control circuit 210 may disable second power converter 214. The first inrush current protection and the second inrush current protection may allow first high-voltage power signal 222A and second high-voltage power signal 222B to safely enter power control circuit 210 and supply power to load 206.

Load 206 may include first winding 252 and second winding 254. In some examples, first winding 252 may represent a first power input of load 206 configured to receive first high-voltage power signal 222A. In some examples, second winding 254 may represent a second power input of load 206 configured to receive second high-voltage power signal 222B. Load 206 may be configured to receive sufficient power when first winding 252 receives first high-voltage power signal 222A, even when second high-voltage power signal 222B is diminished or nonexistent. Load 206 may be configured to receive sufficient power when second winding 254 receives second high-voltage power signal 222B, even when first high-voltage power signal 222A is diminished or nonexistent.

In some examples, load 206 comprises a single electric motor including redundant first winding 252 and second winding 254. That is, a single electric motor of load 206 may be configured to receive first high-voltage power signal 222A via first winding 252 and receive second high-voltage power signal 222B via second winding 254. Load 206 is not limited to including a single electric motor. In some examples, load 206 includes a first electric motor configured to receive first high-voltage power signal 222A via first winding 252 and a second electric motor configured to receive second high-voltage power signal 222B via second winding 254. In any case, first high-voltage power signal 222A and second high-voltage power signal 222B represent redundant high-voltage power signals for supplying power to load 206.

System 200 may represent a power path topology of a high-power controller including redundant high-voltage power inputs. A high-power controller may be used to drive a high-power load such as load 206. For example, when load 206 represents an electric motor, the electric motor may deliver torque and power to the devices such as compressors, pumps, fans, gear boxes, propellers, or any combination thereof. The high-power controller may be integrated with one or more additional system functions such as vapor cycle system control, refringent loop temperature and pressure control, data communication systems, or any combination thereof. System 200 may power these one or more additional system functions using low-voltage power signal 224 from low-voltage power supply 202 and/or low-voltage power signal 225 from first power converter 212.

As seen in FIG. 2, system 200 includes a first power channel of an inrush circuit with inrush resistor 244 in parallel with power switch 246. The first power channel extends through power control circuit 210 from power input connection 232A to power output connection 234A. The first power channel may cross inrush resistor 244 and/or power switch 246 and may include first power converter 212. A second power channel of system 200 may include second power converter 214 configured to boost a low-voltage signal (e.g., a signal from a 28V source). The first power channel including inrush resistor 244 in parallel with power switch 246 may generate an internal low-voltage signal (e.g., low-voltage power signal 225) using first power converter 212. Low-voltage power signal 225 may be 28V or another voltage.

Low-voltage power signal 225 and low-voltage power signal 224 may represent redundant low-voltage power signals. Low-voltage power signal 224 or low-voltage power signal 225 may boost a voltage DC link capacitor assembly 207B. In response to boosting the voltage of DC link capacitor assembly 207B, power control circuit 210 may activate one or more high-voltage inputs. An architecture of system 200 may include an inrush limiter (e.g., inrush protection device 242) with a boost circuit (e.g., second power converter 214) to decrease a weight and a size of power control circuit 210. An inrush limiter may allow power control circuit 210 to generate a backup low-voltage power signal (e.g., low-voltage power signal 225).

High-voltage power may travel through power control circuit 210 using a traditional inrush limiter (e.g., inrush protection device 242) including inrush resistor 244. In response to inrush protection device 242 being present along the first power channel, power control circuit 210 may receive high-voltage power signal 222A to charge DC link capacitor assembly 207A without needing to send information to electrical distribution unit 204 indicating that DC link capacitor assembly 207A is charged before receiving high-voltage power signal 222A. In other words, power control circuit 210 is configured to receive high-voltage power signal 222A at any time without inrush current exceeding an inrush current threshold, even when DC link capacitor assembly 207A is not fully charged. This is because inrush resistor 244 limits inrush current associated with high-voltage power signal 222A in response to DC link capacitor assembly 207A not being fully charged.

Since the first high-voltage power signal 222A is readily available from a traditional inrush channel, first power converter 212 may be connected to the first power channel to generate low-voltage power signal 225. This means that an architecture of system 200 provides redundant low-voltage power signals used to power the second power converter 214. The architecture of system 200 may prevent high-voltage power signals 222 from damaging one or more electrical components by using low-voltage power signal 224 and/or low-voltage power signals 225 to charge DC link capacitor assembly 207B before power control circuit 210 delivers high-voltage power to load 206. For example, first power converter 212 may generate low-voltage power signal 225 to charge DC link capacitor assembly 207B via the inrush resistor 244.

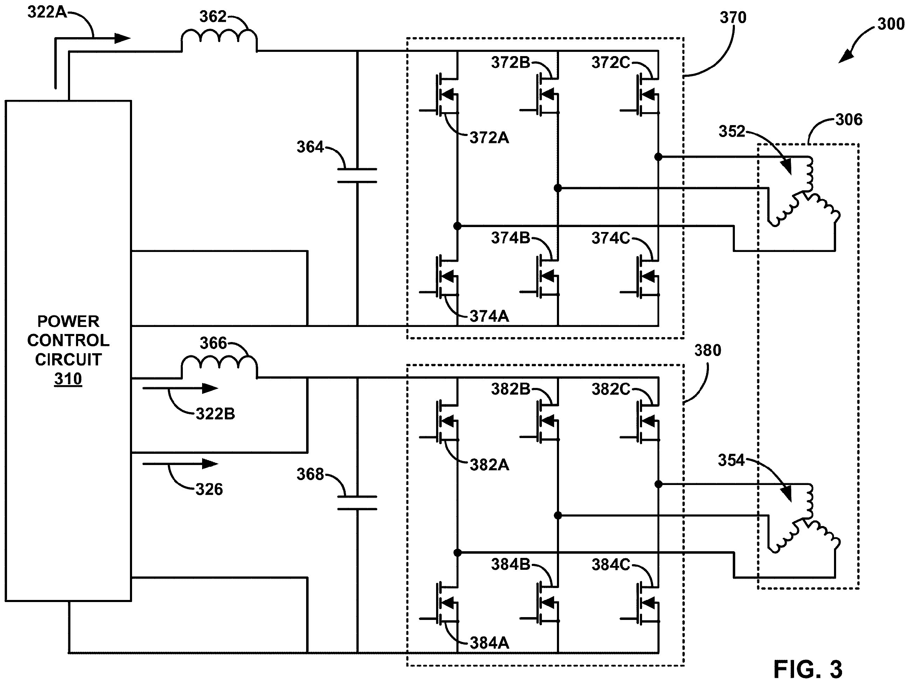

FIG. 3 is a circuit diagram illustrating a system 300 including redundant power channels for supplying high-voltage power to a load, in accordance with one or more techniques of this disclosure. As seen in FIG. 2, system 300 includes power control circuit 310, load 306, first inductor 362, first DC link capacitor assembly 364, second inductor 366 , second DC link capacitor assembly 368, first inverter 370, and second inverter 380. Load 306 includes first winding 352 and second winding 354. First inverter 370 includes first high-side semiconductor devices 372A-372C (collectively, "first high-side semiconductor devices 372") and first low-side semiconductor devices 374A-374C (collectively, "first low-side semiconductor devices 374"). Second inverter 380 includes second high-side semiconductor devices 382A-382C (collectively, "second high-side semiconductor devices 382") and second low-side semiconductor devices 384A-384C (collectively, "second low-side semiconductor devices 384").

Power control circuit 310 may be an example of power control circuit 110 of FIG. 1 and/or power control circuit 210 of FIG. 2. Load 306 may be an example of load 106 of FIG. 1 and/or load 206 of FIG. 2. First winding 352 may be an example of first winding 252 of FIG. 2. Second winding 354 may be an example of second winding 254 of FIG. 2. First DC link capacitor assembly 364 may be an example of DC link capacitor assembly 107A of FIG. 1 and/or DC link capacitor assembly 207A of FIG. 2. Second DC link capacitor assembly 368 may be an example of DC link capacitor assembly 107B of FIG. 1 and/or DC link capacitor assembly 207B of FIG. 2.

Power control circuit 310 may be configured to provide redundant high-voltage power signals to load 306. For example, power control circuit 310 may deliver first high-voltage power signal 322A to first winding 352 of load 306 over a first power channel including first inductor 362, first DC link capacitor assembly 364, and first inverter 370. Power control circuit 310 may deliver second high-voltage power signal 322B to second winding 354 of load 306 over a second power channel including second inductor 366, second DC link capacitor assembly 368, and second inverter 380. Load 306 may receive sufficient power when only one of first winding 352 and second winding 354 receives a high-voltage power signal. This means that when one of first high-voltage power signal 322A and second high-voltage power signal 322B is not delivered to a respective winding or is insufficient, the other of first high-voltage power signal 322A and second high-voltage power signal 322B may provide load 306 with sufficient operating power.

In examples where load 306 is an electric motor, an inrush current associated with first high-voltage power signal 322A and/or second high-voltage power signal 322B may occur when power control circuit 210 powers on or demands energy from a high-voltage power source. When a large voltage difference exists between the high-voltage power source and the first DC link capacitor assembly 364 and/or when a large voltage difference exists between the high-voltage power source and the second DC link capacitor assembly 368, this may cause a temporary current surge otherwise known as inrush current. Inrush current can damage electrical circuit components if inrush current is not limited. One way to limit inrush current is to charge first DC link capacitor assembly 364 and/or second DC link capacitor assembly 368 to minimize a voltage imbalance between the high-voltage power source and the DC link capacitor assemblies 364, 368. Another way to limit inrush current is to use an inrush resistor to limit an amount of current that flows into power control circuit 210.

First inductor 362 may receive, from power control circuit 310, first high-voltage power signal 322A. First inductor 362 represents an electrical circuit component that resists change in a magnitude of electrical current passing through first inductor 362. In some examples, first inductor 362 is defined by an electrically conductive wire that is wrapped in a coil. As electrical current passes through the coil of first inductor 362, a magnetic field is created in the coil, and the magnetic field induces a voltage across the inductor. First inductor 362 defines an inductance value, and the inductance value is the ratio of a voltage across first inductor 362 to the rate of change of current passing through first inductor 362. In some examples, first inductor 362 may represent an electromagnetic interference (EMI) filter.

First DC link capacitor assembly 364 is an electrical circuit component configured for storing electric potential energy. First DC link capacitor assembly 364 may, in some examples, occupy a "charged" state, where first DC link capacitor assembly 364 stores a maximum amount of electric potential energy. Additionally, first DC link capacitor assembly 364 may occupy a "discharged" state where first DC link capacitor assembly 364 stores little or no electric potential energy. First DC link capacitor assembly 364 may also transition between the charged state and the discharged state. When first DC link capacitor assembly 364 is charging, a current flows across first DC link capacitor assembly 364, increasing the electric potential energy stored by first DC link capacitor assembly 364. When first DC link capacitor assembly 364 is discharging, the electric potential energy stored by first DC link capacitor assembly 364 is released, causing first DC link capacitor assembly 364 to emit an electric current.

In some examples, power control circuit 310 may charge first DC link capacitor assembly 364 by delivering high-voltage power signal 322A to first DC link capacitor assembly 364 through an inrush resistor of power control circuit 310 so that a magnitude of an inrush current associated with first high-voltage power signal 322A does not exceed a threshold inrush current magnitude. For example, when power control circuit 310 charges first DC link capacitor assembly 364 through the inrush resistor, this may limit inrush current associated with first high-voltage power signal 322A. First high-voltage power signal 322A may charge first DC link capacitor assembly 364. Based on first DC link capacitor assembly 364 being charged, power control circuit 310 may supply first high-voltage power signal 322A to first winding 352 via first inductor 362 and first inverter 370.

Second inductor 366 may receive, from power control circuit 310, second high-voltage power signal 322B. Second inductor 366 represents an electrical circuit component that resists change in a magnitude of electrical current passing through second inductor 366. In some examples, second inductor 366 is defined by an electrically conductive wire that is wrapped in a coil. As electrical current passes through the coil of second inductor 366, a magnetic field is created in the coil, and the magnetic field induces a voltage across the inductor. Second inductor 366 defines an inductance value, and the inductance value is the ratio of a voltage across second inductor 366 to the rate of change of current passing through second inductor 366. In some examples, second inductor 366 may represent an EMI filter.

Second DC link capacitor assembly 368 is an electrical circuit component configured for storing electric potential energy. Second DC link capacitor assembly 368 may, in some examples, occupy a "charged" state, where second DC link capacitor assembly 368 stores a maximum amount of electric potential energy. Additionally, second DC link capacitor assembly 368 may occupy a "discharged" state where second DC link capacitor assembly 368 stores little or no electric potential energy. Second DC link capacitor assembly 368 may also transition between the charged state and the discharged state. When second DC link capacitor assembly 368 is charging, a current flows across second DC link capacitor assembly 368, increasing the electric potential energy stored by second DC link capacitor assembly 368. When second DC link capacitor assembly 368 is discharging, the electric potential energy stored by second DC link capacitor assembly 368 is released, causing second DC link capacitor assembly 368 to emit an electric current.

In some examples, power control circuit 310 may charge second DC link capacitor assembly 368 so that a magnitude of an inrush current associated with second high-voltage power signal 322B does not exceed a threshold inrush current magnitude. For example, when second DC link capacitor assembly 368 is charged, this may decrease a difference in voltage between second high-voltage power signal 322B and a DC link capacitor assembly corresponding to second DC link capacitor assembly 368 and thus limit inrush current associated with second high-voltage power signal 322B. Power control circuit 310 may output power signal 326 to charge second DC link capacitor assembly 368. Based on second DC link capacitor assembly 368 being charged, power control circuit 310 may output second high-voltage power signal 322B to second winding 354 via second inductor 366 and second inverter 380.

First inverter 370 may, in some examples, represent an inverter for a three-phase electric motor. First inverter 370 includes first high-side semiconductor devices 372 and first low-side semiconductor devices 374. Second inverter 380 may, in some examples, represent an inverter for a three-phase electric motor. Second inverter 380 includes second high-side semiconductor devices 382 and second low-side semiconductor devices 384. A controller may control first inverter 370 and/or control second inverter 380 to control a phase of an electric motor of load 306.

In some examples, first high-side semiconductor devices 372, first low-side semiconductor devices 374, second high-side semiconductor devices 382, and second low-side semiconductor devices 384 may be collectively referred to as "semiconductor devices." Each semiconductor device may, in some cases, include a power switch such as, but not limited to, any type of field-effect transistor (FET) including any one or combination of a metal-oxide-semiconductor field-effect transistor (MOSFET), a bipolar junction transistor (BJT), an insulated-gate bipolar transistor (IGBT), a junction field effect transistor (JFET), a high electron mobility transistor (HEMT), or other kinds of elements that use voltage or current for control. Additionally, each semiconductor device may include any one or combination of n-type transistors, p-type transistors, and other kinds of power transistors. In some examples, each semiconductor device includes vertical transistors, lateral transistors, and/or horizontal transistors. In some examples, each semiconductor device includes other analog devices such as diodes and/or thyristors. In some examples, each semiconductor device may operate as a switch and/or operate as an analog device.

In some examples, each semiconductor device includes three terminals: two load terminals and a control terminal. When a power transistor represents a MOSFET, the power transistor may include a drain terminal, a source terminal, and at least one gate terminal, where the control terminal is a gate terminal. When a power transistor represents a BJT switch, the control terminal may represent a base terminal. Current may flow between the two load terminals of a power transistor, based on the voltage at the respective control terminal. Therefore, electrical current may flow across the power transistor based on control signals delivered to the control terminal of the power transistor. In one example, if a voltage applied to the control terminal of the power transistor is greater than or equal to a voltage threshold, the power transistor may be activated, allowing the power transistor to conduct electricity. Furthermore, the power transistor may be deactivated when the voltage applied to the control terminal of the power transistor is below the threshold voltage, thus preventing the power transistor from conducting electricity.

Each semiconductor device may include various material compounds, such as Silicon, Silicon Carbide, Gallium Nitride, or any other combination of one or more semiconductor materials. In some examples, silicon carbide switches may experience lower switching power losses. Improvements in magnetics and faster switching, such as Gallium Nitride switches, may allow a power transistor to draw short bursts of current. These higher frequency devices may require control signals (e.g., voltage signals delivered to the control terminal of the power transistor) to be sent with more precise timing, as compared to lower-frequency devices.

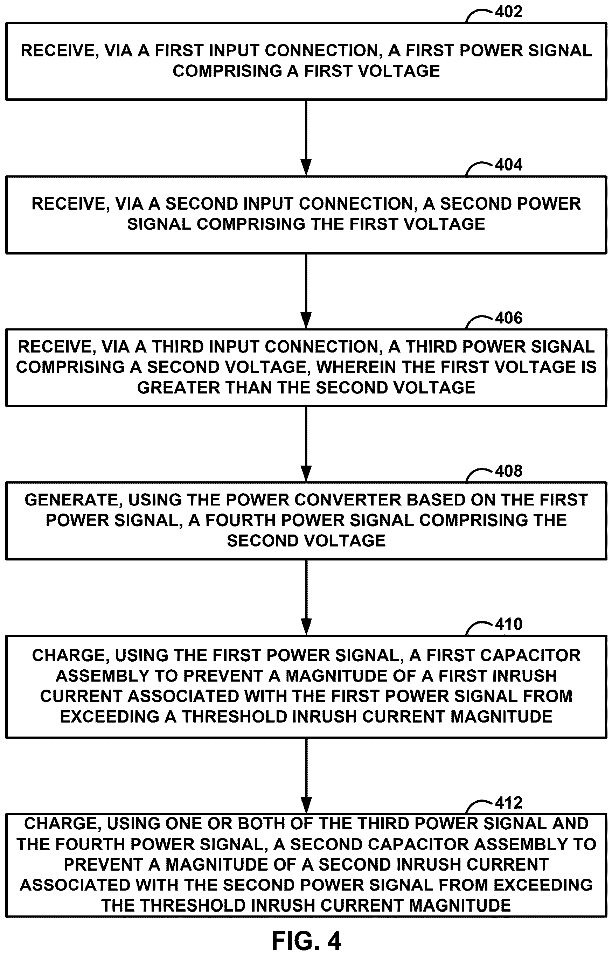

FIG. 4 is a flow diagram illustrating an example operation for charging a DC link capacitor and supplying energy to a load, in accordance with one or more techniques of this disclosure. FIG. 4 is described with respect to system 100 of FIG. 1. However, the techniques of FIG. 4 may be performed by different components of system 100 or by additional or alternative systems.

Power control circuit 110 may receive, via a first input connection, a first power signal comprising a first voltage (402). In some examples, the first power signal comprises first high-voltage power signal 122A of FIG. 1. Power control circuit 110 may receive, via a second input connection, a second power signal comprising the first voltage (404). In some examples, the first power signal comprises first high-voltage power signal 122A of FIG. 1. In some examples, the first voltage comprises 270V, but this is not required. The first voltage may comprise any voltage. Power control circuit 110 may receive, via a third input connection, a third power signal comprising a second voltage (406). In some examples, the third power signal may comprise low-voltage power signal 124 of FIG. 1. In some examples, the second voltage comprises 28V, but this is not required. The second voltage may comprise any voltage.

First power converter 112 may generate, based on the first power signal, a fourth power signal comprising the second voltage (408). In some examples, the fourth power signal comprises a backup low-voltage power signal so that when the third power signal is unavailable or insufficient, the fourth power signal may continue to supply low-voltage power. Power control circuit 110 may charge, using first high-voltage power signal 122A, first DC link capacitor assembly 107A to prevent a magnitude of a first inrush current associated with first high-voltage power signal 122A from exceeding a threshold inrush current magnitude (410). Power control circuit 110 may charge, using one or both of low-voltage power signal 124 and the low-voltage power signal generated by first power converter 112, a second DC link capacitor assembly 107B to prevent a magnitude of the second inrush current associated with second high-voltage power signal 122B from exceeding the threshold inrush current magnitude (412).

The following numbered clauses may demonstrate one or more aspects of the disclosure.

Clause 1: A power control circuit includes a power converter. The power control circuit is configured to: perform one or both of: receive, via a first input connection, a first power signal comprising a first voltage; and receive, via a second input connection a second power signal comprising the first voltage. The power control circuit is configured to perform one or both of: receive, via a third input connection, a third power signal comprising a second voltage, wherein the first voltage is greater than the second voltage; and generate, using the power converter based on the first power signal, a fourth power signal comprising the second voltage. The power control circuit is also configured to charge, using the first power signal, a first capacitor assembly to prevent a magnitude of a first inrush current associated with the first power signal from exceeding a threshold inrush current magnitude; and charge, using one or both of the third power signal and the fourth power signal, a second capacitor assembly to prevent a magnitude of a second inrush current associated with the second power signal from exceeding the threshold inrush current magnitude.

Clause 2: The power control circuit of clause 1, wherein the power control circuit is further configured to perform one or both of: supply, in response to charging the first capacitor assembly, the first power signal to a load; and supply, in response to charging the second capacitor assembly, the second power signal to the load.

Clause 3: The power control circuit of clause 2, wherein in response to the first power signal received via the first input connection being more than a threshold amount of voltage lower than the first voltage, the power control circuit is configured to: receive the second power signal comprising the first voltage via the second input connection; receive the third power signal comprising the second voltage via the third input connection; charge the second capacitor assembly using the third power signal; and supply the second power signal to the load in response to charging the second capacitor assembly.

Clause 4: The power control circuit of any of clauses 2-3, wherein in response to the second power signal received via the second input connection being more than a threshold amount of voltage lower than the first voltage, the power control circuit is configured to: receive the first power signal comprising the first voltage via the first input connection; charge the first capacitor assembly using the first power signal ; and supply the first power signal to the load in response to charging the first capacitor assembly.

Clause 5: The power control circuit of clause 4, wherein the power control circuit further comprises a power switch connected to the first input connection and an inrush resistor connected to the first input connection in parallel with the power switch, and wherein the power control circuit is further configured to: charge the first capacitor assembly using the first power signal while the first power switch is turned off so that the first power signal flows across the inrush resistor; turn on the power switch in response to charging the first capacitor assembly so that the first power signal flows across the power switch without flowing across the inrush resistor; and supply the first power signal to the load in response to turning on the power switch.

Clause 6: The power control circuit of any of clauses 2-5, wherein in response to the third power signal received via the third input connection being more than a threshold amount of voltage lower than the second voltage, the power control circuit is configured to one or both of: perform first inrush protection including: receive the first power signal comprising the first voltage via the first input connection; charge the first capacitor assembly using the first power signal; and supply the first power signal to the load in response to charging the first capacitor assembly; and perform second inrush protection including: receive the first power signal comprising the first voltage via the first input connection; receive the second power signal comprising the first voltage via the second input connection; generate, using the power converter based on the first power signal, the fourth power signal comprising the second voltage; charge the second capacitor assembly using the fourth power signal; and supply the second power signal to the load in response to charging the second capacitor assembly.

Clause 7: The power control circuit of any of clauses 1-6, wherein the power converter comprises a buck converter, and wherein to generate the fourth power signal, the power control circuit is configured to: cause the power converter to step down a voltage of the first power signal so that the fourth power signal comprises the second voltage lower than the first voltage of the first power signal; and cause the power converter to step up a current of the first power signal so that the fourth power signal comprises a second current greater than a first current of the first power signal.

Clause 8: The power control circuit of any of clauses 1-7, wherein the power converter represents a first power converter, wherein the power control circuit further comprises a second power converter, and wherein to charge the second capacitor assembly, the power control circuit is configured to: generate, using one or both of the third power signal and the fourth power signal, a fifth power signal; and output the fifth power signal to charge the second capacitor assembly.

Clause 9: The power control circuit of clause 8, wherein the second power converter comprises a boost converter, and wherein to generate the fifth power signal, the power control circuit is configured to: cause the second power converter to step up a voltage of one or both of the third power signal and the fourth power signal so that the fifth power signal comprises a voltage greater than the second voltage; and cause the power converter to step down a current of one or both of the third power signal and the fourth power signal so that the fifth power signal comprises a current lower than a current of one or both of the third power signal and the fourth power signal.

Clause 10: The power control circuit of any of clauses 8-9, wherein the power control circuit is further configured to: cause the second power converter to output information to an electrical distribution unit indicating that the second capacitor assembly is charged, wherein causing the second power converter to output the information causes the electrical distribution unit to output the second power signal to the load via the power control circuit.

Clause 11: The power control circuit of any of clauses 1-10, wherein the load comprises an electrical motor of an aircraft, the electrical motor comprising a first winding configured to receive the first power signal and a second winding configured to receive the second power signal.

Clause 12: A method comprising performing, by a power control circuit including a power control circuit comprising a power converter, one or both of: receiving, via a first input connection, a first power signal comprising a first voltage; and receiving, via a second input connection a second power signal comprising the first voltage. The method also includes performing, by the power control circuit, one or both of: receiving, via a third input connection, a third power signal comprising a second voltage, wherein the first voltage is greater than the second voltage; and generating, using the power converter based on the first power signal, a fourth power signal comprising the second voltage. Additionally, the method includes charging, by the power control circuit using the first power signal, a first capacitor assembly to prevent a magnitude of a first inrush current associated with the first power signal from exceeding a threshold inrush current magnitude; and charging, by the power control circuit using one or both of the third power signal and the fourth power signal, a second capacitor assembly to prevent a magnitude of a second inrush current associated with the second power signal from exceeding the threshold inrush current magnitude.

Clause 13: The method of claim 12, further comprising performing, by the power control circuit, one or both of: supplying, in response to charging the first capacitor assembly, the first power signal to a load; and supplying, in response to charging the second capacitor assembly, the second power signal to the load.

Clause 14: The method of claim 13, wherein in response to the first power signal received via the first input connection being more than a threshold amount of voltage lower than the first voltage, the method comprises: receiving, by the power control circuit, the second power signal comprising the first voltage via the second input connection; receiving, by the power control circuit, the third power signal comprising the second voltage via the third input connection; charging, by the power control circuit, the second capacitor assembly using the third power signal; and supplying, by the power control circuit, the second power signal to the load in response to charging the second capacitor assembly.

Clause 15: The method of any of claims 13-14, wherein in response to the second power signal received via the second input connection being more than a threshold amount of voltage lower than the first voltage, the method comprises: receiving, by the power control circuit, the first power signal comprising the first voltage via the first input connection; charging, by the power control circuit, the first capacitor assembly using the first power signal; and supplying, by the power control circuit, the first power signal to the load in response to charging the first capacitor assembly.

Clause 16: The method of claim 15, wherein the power control circuit further comprises a power switch connected to the first input connection and an inrush resistor connected to the first input connection in parallel with the power switch, and wherein the method further comprises: charging, by the power control circuit, the first capacitor assembly using the first power signal while the first power switch is turned off so that the first power signal flows across the inrush resistor; turning on, by the power control circuit, the power switch in response to charging the first capacitor assembly so that the first power signal flows across the power switch without flowing across the inrush resistor; and supplying, by the power control circuit, the first power signal to the load in response to turning on the power switch.

Clause 17: The method of any of claims 13-16, wherein in response to the third power signal received via the third input connection being more than a threshold amount of voltage lower than the second voltage, the method comprises: performing, by the power control circuit, first inrush protection including: receiving the first power signal comprising the first voltage via the first input connection; charging the first capacitor assembly using the first power signal; and supplying the first power signal to the load in response to charging the first capacitor assembly; and performing, by the power control circuit, second inrush protection including: receiving the first power signal comprising the first voltage via the first input connection; receiving the second power signal comprising the first voltage via the second input connection; generating, using the power converter based on the first power signal, the fourth power signal comprising the second voltage; charging the second capacitor assembly using the fourth power signal; and supplying the second power signal to the load in response to charging the second capacitor assembly.

Clause 18: The method of any of claims 12-17, wherein the power converter comprises a buck converter, and generating the fourth power signal comprises: causing, by the power control circuit, the power converter to step down a voltage of the first power signal so that the fourth power signal comprises the second voltage lower than the first voltage of the first power signal; and causing, by the power control circuit, the power converter to step up a current of the first power signal so that the fourth power signal comprises a second current greater than a first current of the first power signal.

Clause 19: The method of any of claims 12-18, wherein the power converter represents a first power converter, wherein the power control circuit further comprises a second power converter, and wherein charging the second capacitor assembly comprises: generating, by the power control circuit using one or both of the third power signal and the fourth power signal, a fifth power signal; and outputting, by the power control circuit, the fifth power signal to charge the second capacitor assembly.

Clause 20: A system comprising: a first capacitor assembly; a second capacitor assembly; and a power control circuit comprising a power converter. The power control circuit is configured to perform one or both of: receive, via a first input connection, a first power signal comprising a first voltage; and receive, via a second input connection a second power signal comprising the first voltage. The power control circuit is also configured to perform one or both of: receive, via a third input connection, a third power signal comprising a second voltage, wherein the first voltage is greater than the second voltage; and generate, using the power converter based on the first power signal, a fourth power signal comprising the second voltage. Additionally, the power converter is configured to charge, using the first power signal, the first capacitor assembly to prevent a magnitude of a first inrush current associated with the first power signal from exceeding a threshold inrush current magnitude; and charge, using one or both of the third power signal and the fourth power signal, the second capacitor assembly to prevent a magnitude of a second inrush current associated with the second power signal from exceeding the threshold inrush current magnitude.

In one or more examples, the circuitry described herein may utilize hardware, software, firmware, or any combination thereof for achieving the functions described. Those functions implemented in software may be stored on or transmitted over, as one or more instructions or code, a computer-readable medium and executed by a hardware- based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure.

Instructions may be executed by one or more processors. The one or more processors may, for example, include one or more DSPs, general purpose microprocessors, application specific integrated circuits ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for performing the techniques described herein. Also, the techniques could be fully implemented in one or more circuits or logic elements.

The techniques of this disclosure may be implemented in a wide variety of devices or apparatuses that include integrated circuits (ICs) or sets of ICs (e.g., chip sets). Various components, modules, or units are described in this disclosure to emphasize functional aspects of devices configured to perform the disclosed techniques, but do not necessarily require realization by different hardware units. Rather, various units may be combined or provided by a collection of interoperative hardware units, including one or more processors as described above, in conjunction with suitable software and/or firmware.

Various illustrative aspects of the disclosure are described above. These and other aspects are within the scope of the following claims.

## Claims

1. A power control circuit comprising a power converter, wherein the power control circuit is configured to:
perform one or both of:
receive, via a first input connection, a first power signal comprising a first voltage; and
receive, via a second input connection a second power signal comprising the first voltage;
perform one or both of:
receive, via a third input connection, a third power signal comprising a second voltage, wherein the first voltage is greater than the second voltage; and
generate, using the power converter based on the first power signal, a fourth power signal comprising the second voltage;
charge, using the first power signal, a first capacitor assembly to prevent a magnitude of a first inrush current associated with the first power signal from exceeding a threshold inrush current magnitude; and
charge, using one or both of the third power signal and the fourth power signal, a second capacitor assembly to prevent a magnitude of a second inrush current associated with the second power signal from exceeding the threshold inrush current magnitude.

2. The power control circuit of claim 1, wherein the power control circuit is further configured to perform one or both of:
supply, in response to charging the first capacitor assembly, the first power signal to a load; and
supply, in response to charging the second capacitor assembly, the second power signal to the load.

3. The power control circuit of claim 2, wherein in response to the first power signal received via the first input connection being more than a threshold amount of voltage lower than the first voltage, the power control circuit is configured to:
receive the second power signal comprising the first voltage via the second input connection;
receive the third power signal comprising the second voltage via the third input connection;
charge the second capacitor assembly using the third power signal; and
supply the second power signal to the load in response to charging the second capacitor assembly.

4. The power control circuit of claim 2, wherein in response to the second power signal received via the second input connection being more than a threshold amount of voltage lower than the first voltage, the power control circuit is configured to:
receive the first power signal comprising the first voltage via the first input connection;
charge the first capacitor assembly using the first power signal; and
supply the first power signal to the load in response to charging the first capacitor assembly.

5. The power control circuit of claim 4, wherein the power control circuit further comprises a power switch connected to the first input connection and an inrush resistor connected to the first input connection in parallel with the power switch, and wherein the power control circuit is further configured to:
charge the first capacitor assembly using the first power signal while the first power switch is turned off so that the first power signal flows across the inrush resistor;
turn on the power switch in response to charging the first capacitor assembly so that the first power signal flows across the power switch without flowing across the inrush resistor; and
supply the first power signal to the load in response to turning on the power switch.

6. The power control circuit of claim 2, wherein in response to the third power signal received via the third input connection being more than a threshold amount of voltage lower than the second voltage, the power control circuit is configured to one or both of:
perform first inrush protection including:
receive the first power signal comprising the first voltage via the first input connection;
charge the first capacitor assembly using the first power signal; and
supply the first power signal to the load in response to charging the first capacitor assembly; and
perform second inrush protection including:
receive the first power signal comprising the first voltage via the first input connection;
receive the second power signal comprising the first voltage via the second input connection;
generate, using the power converter based on the first power signal, the fourth power signal comprising the second voltage;
charge the second capacitor assembly using the fourth power signal; and
supply the second power signal to the load in response to charging the second capacitor assembly.

7. The power control circuit of claim 1, wherein the power converter comprises a buck converter, and wherein to generate the fourth power signal, the power control circuit is configured to:
cause the power converter to step down a voltage of the first power signal so that the fourth power signal comprises the second voltage lower than the first voltage of the first power signal; and
cause the power converter to step up a current of the first power signal so that the fourth power signal comprises a second current greater than a first current of the first power signal.

8. The power control circuit of claim 1, wherein the power converter represents a first power converter, wherein the power control circuit further comprises a second power converter, and wherein to charge the second capacitor assembly, the power control circuit is configured to:
generate, using one or both of the third power signal and the fourth power signal, a fifth power signal; and
output the fifth power signal to charge the second capacitor assembly.

9. The power control circuit of claim 8, wherein the second power converter comprises a boost converter, and wherein to generate the fifth power signal, the power control circuit is configured to:
cause the second power converter to step up a voltage of one or both of the third power signal and the fourth power signal so that the fifth power signal comprises a voltage greater than the second voltage; and
cause the power converter to step down a current of one or both of the third power signal and the fourth power signal so that the fifth power signal comprises a current lower than a current of one or both of the third power signal and the fourth power signal.

10. The power control circuit of claim 8, wherein the power control circuit is further configured to:
cause the second power converter to output information to an electrical distribution unit indicating that the second capacitor assembly is charged,
wherein causing the second power converter to output the information causes the electrical distribution unit to output the second power signal to a load via the power control circuit.

11. The power control circuit of claim 1, wherein a load comprises an electrical motor of an aircraft, the electrical motor comprising a first winding configured to receive the first power signal and a second winding configured to receive the second power signal.

12. A method comprising:
performing, by a power control circuit including a power control circuit comprising a power converter, one or both of:
receiving, via a first input connection, a first power signal comprising a first voltage; and
receiving, via a second input connection a second power signal comprising the first voltage;
performing, by the power control circuit, one or both of:
receiving, via a third input connection, a third power signal comprising a second voltage, wherein the first voltage is greater than the second voltage; and
generating, using the power converter based on the first power signal, a fourth power signal comprising the second voltage;
charging, by the power control circuit using the first power signal, a first capacitor assembly to prevent a magnitude of a first inrush current associated with the first power signal from exceeding a threshold inrush current magnitude; and
charging, by the power control circuit using one or both of the third power signal and the fourth power signal, a second capacitor assembly to prevent a magnitude of a second inrush current associated with the second power signal from exceeding the threshold inrush current magnitude.

13. The method of claim 12, further comprising performing, by the power control circuit, one or both of:
supplying, in response to charging the first capacitor assembly, the first power signal to a load; and
supplying, in response to charging the second capacitor assembly, the second power signal to the load.

14. The method of claim 13, wherein in response to the first power signal received via the first input connection being more than a threshold amount of voltage lower than the first voltage, the method comprises:
receiving, by the power control circuit, the second power signal comprising the first voltage via the second input connection;
receiving, by the power control circuit, the third power signal comprising the second voltage via the third input connection;
charging, by the power control circuit, the second capacitor assembly using the third power signal; and
supplying, by the power control circuit, the second power signal to the load in response to charging the second capacitor assembly.

15. The method of claim 13, wherein in response to the second power signal received via the second input connection being more than a threshold amount of voltage lower than the first voltage, the method comprises:
receiving, by the power control circuit, the first power signal comprising the first voltage via the first input connection;
charging, by the power control circuit, the first capacitor assembly using the first power signal; and
supplying, by the power control circuit, the first power signal to the load in response to charging the first capacitor assembly.
